# EUROPÄISCHE PATENTSCHRIFT

(11) **EP 2 033 926 B1**
(45) Veröffentlichungstag und Bekanntmachung des Hinweises auf die Patenterteilung: **31.12.2014**
(21) Anmeldenummer: 08166222.3
(22) Anmeldetag: 21.09.2006
(51) Int. Cl.: B66B 1/46, B66B 1/48

(54) **Aufzugsanlage zur Beförderung von Aufzugsbenutzern in einem Gebäudeareal**
Lift assembly for transporting lift users in a building area
Installation d'ascenseur destinée au transport d'utilisateurs d'ascenseur dans une aire d'immeuble

(30) Priorität: 30.09.2005 EP 05109093
(43) Veröffentlichungstag der Anmeldung: 11.03.2009
(62) Teilanmeldung aus: 06775203.0
(73) Patentinhaber: Inventio AG, 6052 Hergiswil (CH)
(72) Erfinder: Finschi, Lukas, 6006 Luzern (CH)

(56) Entgegenhaltungen:
- EP-A1- 1 314 676
- EP-A1- 1 475 754
- DE-A1-102004 042 999
- US-A- 5 689 094
- US-B1- 6 397 976
- US-B1- 7 093 693
- PATENT ABSTRACTS OF JAPAN Bd. 2003, Nr. 12, 5. Dezember 2003 (2003-12-05) & JP 2004, 315127, A, (MITSUBISHI ELECTRIC CORP), 11. November 2004 (2004-11-11)

## Beschreibung

Die Erfindung bezieht sich auf ein Verfahren zum Betreiben einer Aufzugsanlage zur Beförderung von Aufzugsbenutzern in einem Gebäudeareal. Weiter bezieht sich die Erfindung auf eine Aufzugsanlage zur Durchführung des obigen Verfahrens.

Aus der EP 0 699 617 B1 ist eine Aufzugsanlage mit einer Erkennungsvorrichtung bekannt, bei der ein Aufzugsbenutzer einen Informationsgeber mit sich trägt, der von Erkennungsvorrichtungen abgefragt wird, die am Eingang zu den Aufzügen angebracht sind. Die auf dem Informationsgeber abgespeicherten Daten werden der Aufzugssteuerung weitergeleitet, um den Aufzug entsprechend den gespeicherten Daten zu steuern.

In der EP 1 295 838 A1 wird eine Steuereinrichtung zur Beförderung von Personen/Gütern mit Hilfe von Benutzerprofilen beschrieben. In den Benutzerprofilen der Steuereinrichtung sind individuelle Förderpräferenzen der Personen/Güter gespeichert. Es ist eine Erkennungsvorrichtung vorgesehen, die einen Identifikationscode einer/s Person/Guts erkennt. Für jeden erkannten Identifikationscode wird ein Benutzerprofil der/s zu befördernden Person/Guts bereitgestellt. Die Aufzugsanlage wird von einer Steuereinrichtung angesteuert. Diese Ansteuerung basiert in Teilen auf dem Benutzerprofil und umfasst vielfältige aufzugsspezifische Angaben wie das Einsteige- und Zielstockwerk der/s zu befördernden Person/Guts. Es ist jedoch nicht möglich, festzustellen, ob die/das zu befördernde Person/Gut auch tatsächlich gemäss dem Benutzerprofil befördert wird.

Die Benutzer einer Aufzugsanlage können sowohl Personen als auch Güter sein und werden im Folgenden als Aufzugsbenutzer bezeichnet.

In Gebäudearealen, die über eine Vielzahl von Aufzügen verfügen, wird häufig über eine Zielrufsteuerung eine Zuweisung der Aufzüge zu einzelnen Aufzugsbenutzern vorgenommen. Die Aufzugsbenutzer müssen dann keine Kabinenrufe mehr tätigen. Es ist bekannt, am Eingang von derartigen Gebäudearealen eine Zugangskontrolle einzurichten, um solchen Aufzugsbenutzern, die sich identifizieren können, Zutritt zu gewähren und um anderen Aufzugsbenutzern, die sich nicht identifizieren können, den Zutritt zu verwehren. Allerdings verfügen Gebäudeareale häufig über öffentliche und private bzw. firmeninterne Bereiche, sodass am Eingang des Gebäudeareals sowohl Aufzugsbenutzer eingelassen werden, die Zutritt zu den privaten Bereichen im Gebäudeareal haben, als auch Aufzugsbenutzer eingelassen werden, die nur Zutritt zu den öffentlichen Bereichen haben. Die Kontrolle und Überprüfung der Zutrittsberechtigungen in Gebäudearealen ist somit nicht einfach zu realisieren.

Der weitere Aufenthalt oder auch die Bewegung der Aufzugsbenutzer im jeweiligen Gebäudeareal lässt sich nun nur mit hohem Aufwand überwachen. So ist es beispielsweise möglich, dass ein nicht berechtigtes Aufzugsbenutzer mit in eine Aufzugskabine einsteigt, die in einen privaten Bereich fährt und somit Zugang zu den privaten Bereichen erlangt. Eine Absicherung dieser privaten Bereiche für derartige Fälle ist bisher nur durch aufwändige Überwachung oder durch weitere Zutrittskontrollen in den privaten Bereichen möglich. Solche Absicherungen benötigen einen geschulten, oft bewaffneten Sicherheitsdienst sowie spezielle und massive Vorrichtungen. All dies wirkt einschüchternd und ist unschön anzusehen.

**Aufgabe** der Erfindung ist es deshalb, in einem Gebäudeareal, welches über Bereiche mit unterschiedlichen Zutrittsberechtigungen verfügt, eine Aufzugsanlage und ein Verfahren anzugeben, mit denen der Aufenthalt von Aufzugsbenutzern in dem Gebäudeareal ohne grossen Aufwand überwacht und überprüft werden kann, um ein wirkungsvolles Ansteuern der Aufzugsanlage bzw. Eingreifen eines Sicherheitsdienstes zu ermöglichen.

Zur **Lösung** dieser Aufgabe wird ein Verfahren zum Betreiben einer Aufzugsanlage gemäss Patentanspruch 1 und eine Aufzugsanlage gemäss Patentanspruch 15 vorgeschlagen.

Vorteilhafte Ausgestaltungen sind den Unteransprüchen zu entnehmen.

Ein im Gebäudeareal zu befördernder Aufzugsbenutzer kann zum Starten der Beförderung mit der Aufzugsanlage entweder einen Zielruf oder eine Kombination eines Aufzugsrufs mit einem Kabinenruf auslösen. Ein Aufzugsruf ist ein Ruf, bei dem nur der Einsteigeort an eine Aufzugssteuerung übermittelt wird. Die Aufzugssteuerung weist dem entsprechenden Aufzugsbenutzer eine Aufzugskabine zu. Nach dem Besteigen der Kabine löst der Aufzugsbenutzer in der Kabine einen Kabinenruf aus. Der Kabinenruf wird an die Aufzugssteuerung übermittelt und die Kabine befördert daraufhin der Aufzugsbenutzer vom Einsteigeort zum entsprechenden Stockwerk befördert, welches dem Zielort des Kabinenrufs entspricht. Ein Zielruf ist ein Ruf, bei nicht nur der Einsteigeort sondern auch der Zielort an eine Aufzugssteuerung übermittelt werden. Die Aufzugssteuerung weist dem entsprechenden Aufzugsbenutzer eine Aufzugskabine zu, die diesem Aufzugsbenutzer vom Einsteigeort zum entsprechenden Stockwerk befördert, welches dem Zielort des Zielrufs entspricht, und dies ohne das vom Aufzugsbenutzer ein weiterer Kabinenruf auszulösen ist.

Kern der Erfindung ist es, von den Aufzugsbenutzern im Gebäudeareal die Position zu erfassen. Wenn von einem erfassten Aufzugsbenutzer ein Zielruf bzw. Aufzugsruf ausgelöst wird, und wenn dieser Zielruf bzw. Aufzugsruf von einer zugeordneten Aufzugskabine bedient wird, wird die Position eines erfassten Aufzugsbenutzers, der eine Aufzugskabine bestiegen hat, mit der Position desjenigen Aufzugsbenutzers verglichen, der den Zielruf bzw. Aufzugsruf ausgelöst hat. Falls der Aufzugsbenutzer einen Aufzugsruf ausgelöst hat, löst er in der Kabine einen Kabinenruf aus. Weiter basiert die Erfindung darauf, den Aufzugsbenutzern Zutrittsberechtigungen zu Gebäudebereichen zu erteilen. So wird in der Aufzugskabine überprüft, ob der erfasste Aufzugsbenutzer eine Zutrittsberechtigung für einen Zielort besitzt, der dem Zielruf bzw. Kabinenruf entspricht.

In einer vorteilhaften Ausgestaltung der Erfindung ist es möglich zu überprüfen, ob alle Aufzugsbenutzer, die in einer Aufzugskabine befördert werden, auch einen Zielruf bzw. Aufzugsruf ausgelöst haben. Falls ein Aufzugsbenutzer nicht über eine entsprechende Zutrittsberechtigung für den Zielort verfügt, kann eine Sicherheitsmassnahme ausgelöst werden. Und wenn festgestellt wird, dass in der Aufzugskabine ein Aufzugsbenutzer befindlich ist, das keinen Zielruf bzw. Aufzugsruf ausgelöst hat, wird ebenfalls eine Sicherheitsmassnahme ausgelöst.

Insbesondere ist es vorteilhaft, wenn sich der Aufzugsbenutzer, der einen Zielruf bzw. Aufzugsruf auslöst, identifizieren muss. Dies kann beispielsweise über eine Eingabetastatur erfolgen, in die ein Code eingegeben wird. Alternativ kann dies drahtlos über eine Chipkarte vorgenommen werden. Die Identifizierung ist auch durch Passworteingabe über ein Eingabeterminal möglich. Zusätzlich zur Identifizierung ist auch eine Authentifizierung möglich. Diese Gegen-Überprüfung oder Authentifizierung erhöht die Sicherheit im Gebäudeareal. Beispielsweise erfolgt die Authentifizierung durch biometrische Erkennungssysteme eines Gesichts, einer Iris, eines Fingerabdrucks, der Sprache, usw.. Besonders vorteilhaft ist es, wenn der Aufzugsbenutzer, welcher einen Zielruf bzw. Aufzugsruf auslöst, sich sowohl identifiziert als auch authentifiziert. Allenfalls kann die Identifikation und die Authentifizierung in einem Schritt erfolgen.

Besonders vorteilhaft ist es in einer weiteren Ausgestaltung der Erfindung, wenn die Anzahl der Aufzugsbenutzer, die einen Zielruf bzw. Aufzugsruf ausgelöst haben und in ihrer Position erfasst worden sind, ermittelt wird und mit der Anzahl der Aufzugsbenutzer verglichen wird, die eine Aufzugskabine bestiegen haben. Somit lässt sich überprüfen, ob eine Differenz zwischen der Anzahl existiert. Sollte die Anzahl der Aufzugsbenutzer, die einen Zielruf bzw. Aufzugsruf ausgelöst haben bzw. erfasst wurden von der Anzahl der Aufzugsbenutzer, die eine Aufzugskabine bestiegen haben, abweichen, besteht ein erhöhtes Sicherheitsrisiko.

Besonders vorteilhaft ist es, wenn bei einer Nicht-Übereinstimmung der Position des Aufzugsbenutzers, der die Aufzugskabine bestiegen hat, mit der Position des einen Zielruf bzw. Aufzugsruf auslösenden Aufzugsbenutzers, der von der Aufzugskabine bedient wird, eine Sicherheitsmassnahme vorgenommen wird. Diese Sicherheitsmassnahme kann beispielsweise ein Überwachen der betroffenen Flure durch installierte Sicherheitskameras nach sich ziehen. Eine andere Möglichkeit ist das persönliche Überprüfen der betroffenen Flure durch Sicherheitskräfte.

Weitere Möglichkeiten bestehen darin, die Aufzugssteuerung zu beeinflussen und gegebenenfalls die Bereiche im Gebäudeareal nicht mehr anzufahren, die eine hohe Sicherheitsstufe aufweisen. Somit wird wirkungsvoll verhindert, dass nicht berechtigte Aufzugsbenutzer in diese Hochsicherheitsbereiche gelangen.

Bei der Erfassung der Position von Aufzugsbenutzern kann sowohl die räumliche Position erfasst werden, als auch eine zeitliche Position eines Aufzugsbenutzers in einem Gebäudeareal. Die räumliche Position kann dabei unterschiedlich stark aufgelöst sein. So kann sie einfachsten Falls die Information enthalten, auf welcher Ebene sich ein Aufzugsbenutzer befindet. Es ist aber ebenso möglich, eine Ebene in mehrere Sektoren zu unterteilen und zusätzlich zu der Ebenen-Information auch noch eine Sektor-Information hinzuzufügen. Alternativ oder auch in Kombination zur räumlichen Position kann die zeitliche Position eines Aufzugsbenutzers erfasst werden. So kann beispielsweise festgestellt werden, wenn ein Aufzugsbenutzer zu einem Zeitpunkt ein Gebäudeareal betreten hat und nach einer fest voreingestellten Zeitperiode keinen Zielruf bzw. Aufzugsruf getätigt hat, dieser Aufzugsbenutzer sich möglicherweise unberechtigt irgendwo in einem anderen Gebäudebereich aufhält. Weiter ist es somit möglich, dass Aufzugsbenutzer, denen einen nur in einem bestimmten Zeitfenster ein Zutritt zu den Gebäudeabschnitten erlaubt ist, zu Zeiten, in denen sie normalerweise keinen Zutritt zum Gebäudeareal haben, eine erhöhte Überwachung zuteil wird.

Die Aufzugsbenutzer können Personen oder Güter sein. Die Güter werden vorzugsweise von Personen befördert. Durch die Überwachung eines Beförderungsgutes kann sichergestellt werden, dass die entsprechenden Güter nur in die dafür vorgesehenen Gebäudeebenen transportiert werden können.

Die Aufgabe wird auch durch eine Aufzugsanlage gelöst, die mehrere Aufzugskabinen umfasst. Weiter ist eine Positionserfassungsvorrichtung am Gebäudeeingang und/oder im Gebäudeareal und/oder in Aufzugskabinen angeordnet. Die Aufzugsanlage umfasst Eingabeterminals zur Eingabe eines Aufzugsrufs. Weiter ist eine Aufzugssteuerung zur Steuerung der einzelnen Aufzugskabinen vorgesehen. Eine Hauptsteuereinheit ist sowohl mit einer Erfassungs- als auch Identifizierungseinheit, einer Zutrittsberechtigungseinheit, Eingabeterminals für Aufzugsrufe und mit den Aufzugskabinen verbunden.

Nachfolgend wird die Erfindung anhand von Ausführungsbeispielen näher erläutert, die in schematischer Weise in den Zeichnungen dargestellt sind. Hierbei zeigen:
- Figur 1: eine schematische Darstellung einer Aufzugsanlage gemäss der vorliegenden Erfindung;
- Figur 2: ein Flussablaufdiagramm für ein Verfahren gemäss der vorliegenden Erfindung.

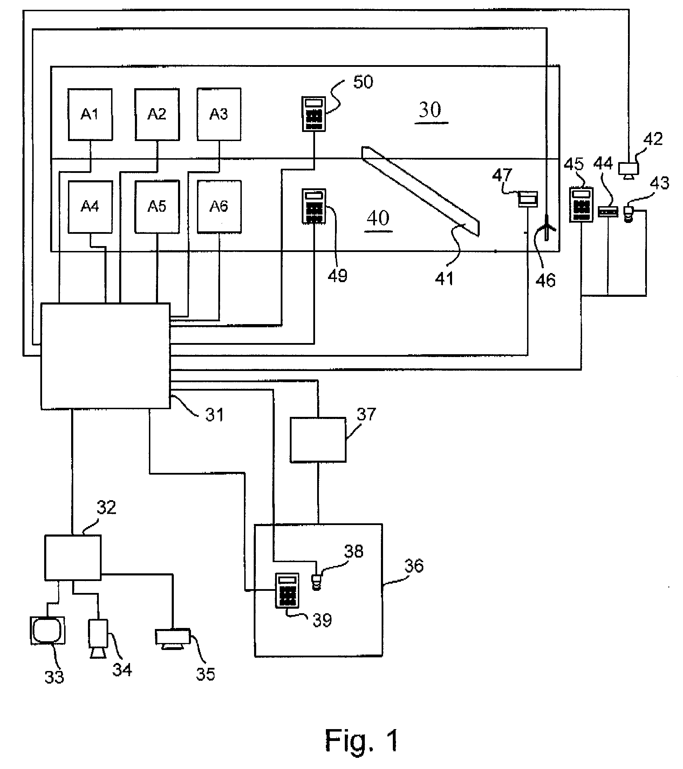

Die erfindungsgemässe Aufzugsanlage befindet sich in einem Gebäudeareal. Das Gebäudeareal ist entweder ein Gebäude mit mehreren Ebenen wie ein Bürohaus, ein Krankenhaus, ein Einkaufszentrum, usw., oder es ist ein aus mehreren solchen Gebäuden bestehender Komplex wie ein Fabrikgelände, eine Sportanlage, usw.. Die Aufzugsanlage umfasst mehrere Aufzüge mit einer oder mehreren Aufzugskabine/n A1 bis A6 pro Aufzugsschacht. Der Aufzugsschacht verläuft durch mehrere Ebenen 30, 40 des Gebäudeareals. In den verschiedenen Ebenen des Gebäudeareals befinden sich Zugänge zum Aufzugsschacht. In Figur 1 sind die Zugänge zu den Aufzugskabinen A1 bis A3 in der zweiten Ebene 30 angeordnet und die Zugänge zu den Aufzugskabinen A4 bis A6 sind in der ersten Ebene 40 angeordnet. Die einzelnen Ebenen sind beispielsweise auch über Fahrsteige 41 und Treppenhäuser miteinander verbunden.

In jeder Ebene 30, 40 ist wenigstens ein Eingabeterminal 49, 50 zur Eingabe von Aufzugsrufen vorgesehen. Diese Eingabeterminals 49, 50 beinhalten beispielsweise eine Eingabetastatur und ein Display zur Anzeige einer zugewiesenen, den Zielruf bzw. Aufzugsruf bedienenden Aufzugskabine. Die Eingabeterminals sind vorteilhafterweise nahe der Zugänge zu den Aufzügen angeordnet. Die Eingabeterminals 49, 50 sind über elektronische Datenleitungen mit einer Hauptsteuereinheit 31 der Aufzugsanlage verbunden. Somit werden die Aufzugsrufe an die Hauptsteuereinheit 31 übermittelt.

Weiter ist im Gebäudeareal eine Positionserfassungsvorrichtung angeordnet, die einfachsten Falls durch eine Kamera 42 in einem Eingangsbereich des Gebäudeareals realisiert ist. Im Normalfall besteht die Positionserfassungsvorrichtung aus einer Vielzahl solcher Kameras, die überall im Gebäudeareal angebracht sind. Vorteilhafterweise werden alle für Aufzugsbenutzer im Gebäudeareal zugänglichen Wege von Kameras erfasst. Dabei weist jede Kamera einen spezifischen Erfassungsbereich auf. Benachbarte Kameras sind so angeordnet, dass sich ihr Erfassungsbereich zumindest bereichsweise überlappt. Ein Aufzugsbenutzer, der sich von einem ersten Erfassungsbereich in einen benachbarten zweiten Erfassungsbereich bewegt, wird somit zuerst nur von der ersten Kamera erfasst, sobald er einen Überlappungsbereich durchquert, wird er von beiden Kameras erfasst und danach nur von der zweiten Kamera. Vorteilhafterweise sind die Kameras mit einer Auswerteeinheit und einem Speichermedium verbunden. Die erfassten Aufzugsbenutzerpositionen werden von der Auswerteeinheit ausgewertet und auf dem Speichermedium als räumliche- und zeitliche Positionsdaten festgehalten. Durch Auswertung der Kamerasignale lässt sich laufend kontrollieren, wo sich ein Aufzugsbenutzer im Gebäudeareal gerade befindet. Für die Aufzugsbenutzererfassung eignen sich übliche digitale Flüssigkristalldisplay (LCD) Kameras, es lassen sich aber auch Bewegungssensoren wie Infrarot (IR) Detektoren oder Radar- und Ultraschallsensoren einsetzen. Die Auswerteeinheit kann eine Standard-Recheneinheit mit einem Programm zum Erkennen von Kamerasignalen in Form digitaler Bilder sein. Ein solches Erkennungsprogramm erlaubt beispielsweise eine Unterscheidung verschiedener Aufzugsbenutzer auf einem Kamerabild. Unterscheidungskriterien sind die Farbe, Grösse und Form von Aufzugsbenutzern oder auch die durch Bildvergleiche feststellbaren Differenzen zwischen Bildern verschiedener Kameras oder zwischen Bildern, die zu verschiedenen Zeitpunkten aufgenommen wurden. So lässt sich die Anzahl von Aufzugsbenutzern pro Kamerabild ermitteln. Auch erlaubt ein solches Erkennungsprogramm die Ermittlung der Bewegungsrichtung und Geschwindigkeit von Aufzugsbenutzern auf Kamerabildern. Mehrere solche Erkennungsprogramme sind kommerziell erhältlich.

Eine Identifizierungseinheit umfasst beispielsweise ein Eingabeterminal 45 mit einer numerischen Tastatur oder einen Kartenleser 44. Eine alternative Ausgestaltung umfasst einen drahtlosen Chipkartenleser 43, der beispielsweise auf Radiofrequenz-Identifikation (RFID) Chips gespeicherte Codes abfragen kann, die von den Aufzugsbenutzern getragen werden. Über diese derartig ausgetauschten Codes, die entweder eingegeben werden, von der Karte oder dem RFID Chip gelesen werden, wird ein Aufzugsbenutzer identifiziert. Nach einer Identifikation mittels der Identifizierungseinheit wird durch sich öffnende Türen oder frei gegebene Drehkreuze 46 ein Zugang ins Gebäudeareal gewährt. Bei der Identifikation bzw. nachdem ein Aufzugsbenutzer Zutritt zum Gebäudeareal erlangt hat, wird ihm mittels der Zutrittsberechtigungseinheit eine Zutrittsberechtigung zugewiesen.

Weiter umfasst die Aufzugsanlage eine Hauptsteuereinheit 31, an die sämtliche Komponenten der Aufzugsanlage angeschlossen sind. Die Hauptsteuereinheit kann auch durch Zusammenwirken mehrerer verteilter Steuereinheiten realisiert werden. Die Hauptsteuereinheit 31 ist mit einer Sicherheitseinheit 32 gekoppelt, die über mehrere Monitore 33, über Lautsprechereinheiten 34 und Kamerasysteme 35 verfügt. Die Kamera- und Lautsprechersysteme 34, 35 können über die Ebenen 30 und 40 bzw. weitere Ebenen im Gebäudeareal verteilt sein.

Weiter ist schematisch in Figur 1 eine Detailansicht einer Aufzugskabine A1-A6 dargestellt. Die Aufzugskabine 36 ist mit der Hauptsteuereinheit 31 gekoppelt. In der Aufzugskabine 36 befindet sich ebenfalls ein Eingabeterminal 39 mit einer numerischen Tastatur und einem Anzeigedisplay. Eine Alternative stellt ein RFID Chip-Reader 38 dar. Die Aufzugskabine 36 wird von einer Aufzugssteuerung 37 gesteuert, wobei die Aufzugssteuerung 37 ihre Befehle ebenfalls von der Hauptsteuereinheit 31 empfängt. Die Hauptsteuereinheit 31 führt zu jedem Aufzug ein Förderprofil mit allen notwendigen Daten zum Betreiben des Aufzugs. So umfasst ein Förderprofil dauernd aktualisierte Angaben über die Anzahl der Aufzugsrufe, die der Aufzugskabine 36 zugeordnet sind. Zu jedem Aufzugsruf protokolliert das Förderprofil die Einsteigeund die Zielebene und auch den Zeitpunkt zu dem der Zielruf bzw. Aufzugsruf ausgelöst wurde. Auch gibt das Förderprofil die Reihenfolge an, in der die Ziele von der Aufzugskabine 36 angefahren werden. Es ist daher besonders vorteilhaft, wenn auch die Positionsdaten und die Zutrittsberechtung eines jeden Aufzugsbenutzers an die Hauptsteuereinheit 31 übermittelt und im Förderprofil abgelegt werden. Die Hauptsteuereinheit 31 kann so jedem an einem Eingabeterminal 49, 50 getätigten Zielruf bzw. Aufzugsruf genau eine zeitlich aktuelle Aufzugsbenutzerposition und eine Zutrittsberechtigung des Aufzugsbenutzers zuordnen. Hierzu sind die Positionserfassungsvorrichtung und die Hauptsteuereinheit 31 über eine elektronische Datenleitung, beispielsweise ein Bussystem oder ein Netzwerk, miteinander verbunden.

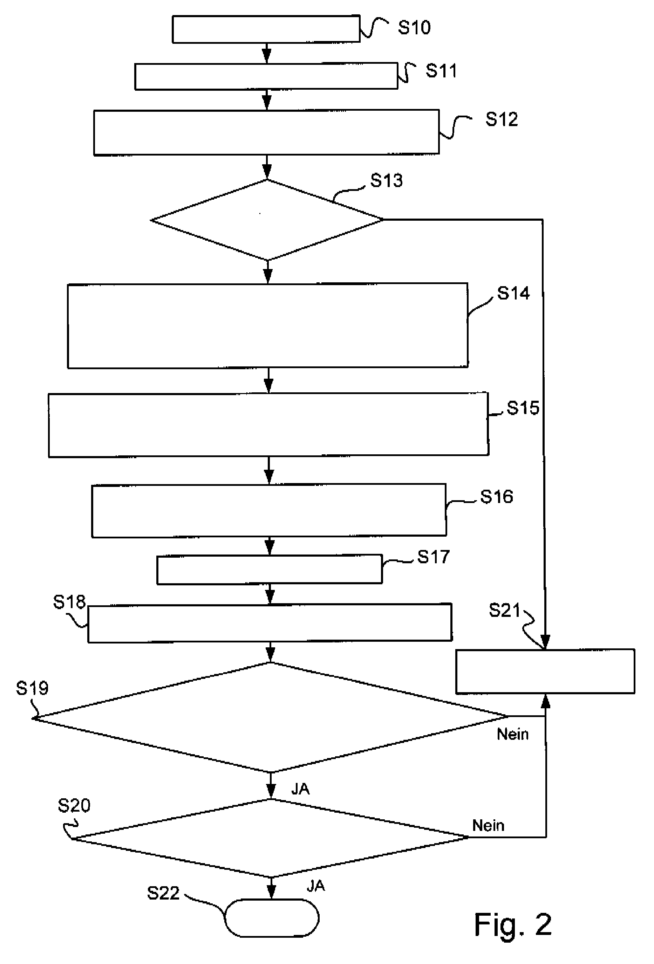

Im Folgenden wird ein erfindungsgemässes Verfahren gemäss Figur 2 erläutert. Nachdem ein Aufzugsbenutzer in Form einer Person oder eines Beförderungsgutes das Gebäudeareal betreten bzw. in das Gebäudeareal gebracht wurde S10, wird die Position des Aufzugsbenutzers in Schritt S11 erfasst. Nachdem die Position beispielsweise über die Kamera 42 erfasst wurde S11, wird der Aufzugsbenutzer identifiziert bzw. authentifiziert S12. Diese Identifizierung bzw. Authentifizierung erfolgt beispielsweise über ein Eingabeterminal 45, über einen Chipkarten-Reader 44 oder über ein drahtloses RFID Chip-Interface 43. Zur Authentifizierung des Aufzugsbenutzers erfasst beispielsweise ein biometrisches Erkennungssystem vom Aufzugsbenutzer ein Gesicht, eine Iris, einen Fingerabdruck, Sprache, usw.. In Schritt S13 wird überprüft, ob sich der Aufzugsbenutzer korrekt identifiziert bzw. authentifiziert hat und ob seine Position erfasst wurde. Im Fall, dass sich der Aufzugsbenutzer nicht identifiziert bzw. authentifiziert hat oder seine Position nicht erfasst wurde, wird eine Sicherheitsmassnahme S21 eingeleitet. Diese Sicherheitsmassnahme S21 kann beispielsweise umfassen, dass die Eingangstüren bzw. Drehkreuze 46 oder andersartige Barrieren blockiert werden oder blockiert bleiben, um ein gewaltsames Eindringen eines nicht berechtigten Aufzugsbenutzers zu verhindern. Nachdem sich der Aufzugsbenutzer korrekt identifiziert bzw. authentifiziert hat und seine Position erfasst wurde, wird ihm in Schritt S14 eine Zugangsberechtigung erteilt. Dies kann einfachsten Falls ein Öffnen einer Tür sein bzw. ein Freigeben eines Drehkreuzes 46.

Nachdem der Aufzugsbenutzer das Gebäudeareal korrekt betreten hat, kann er sich beispielsweise von einer ersten Ebene 40 über eine Rolltreppe 41 in eine andere Ebene, beispielsweise eine zweite Ebene 30, begeben. Dabei wird die aktuelle Position des Aufzugsbenutzers laufend von der Positionserfassungsvorrichtung ermitttelt. Je nachdem, in welcher Ebene 30, 40 sich der Aufzugsbenutzer befindet, kann er in Schritt S15 an einem Eingabeterminal 49, 50 in der entsprechenden Ebene einen Zielruf bzw. Aufzugsruf eingeben. Dieser Zielruf bzw. Aufzugsruf wird beispielsweise über eine numerische Tastatur eingegeben und an die Hauptsteuereinheit 31 übertragen. Die Hauptsteuereinheit 31 weist dem Aufzugsbenutzer dann in Schritt S16 eine Aufzugskabine zu, die sich auf der entsprechenden Ebene befindet und beispielsweise vom Eingabeterminal 49 oder 50 in einem Display dargestellt wird.

In Schritt S17 betritt der erfasste Aufzugsbenutzer die ihm zugewiesene Aufzugskabine.

Falls der Aufzugsbenutzer keinen Zielruf sondern einen Aufzugsruf gelöst hat, löst der Aufzugsbenutzer in Schritt S18 in der Aufzugskabine einen Kabinenruf.

Vorteilhafterweise wird in Schritt S19 die Anzahl bzw. Position der erfassten Aufzugsbenutzer in der Aufzugskabine überprüft. Dies erfolgt vorteilhafterweise durch das Erkennungsprogramm der Positionserfassungsvorrichtung. Stimmt beispielsweise die Anzahl der Aufzugsbenutzer, die sich der Aufzugskabine befinden, nicht mit der Anzahl der Aufzugsbenutzer überein, die dieser Aufzugskabine zugewiesen wurden, kann eine Sicherheitsmassnahme S21 ausgelöst werden. Alternativ oder zusätzlich kann in Schritt S19 eine Sicherheitsmassnahme ausgelöst werden, wenn die Position der Aufzugsbenutzer in der Aufzugskabine nicht mit der Position desjenigen Aufzugsbenutzers übereinstimmt, der den Zielruf bzw. Aufzugsruf getätigt hat. Im Falle einer Sicherheitsmassnahme wird eine Sicherheitsabteilung informiert, indem beispielsweise die Monitore 33 in der Sicherheitsabteilung direkt auf die betroffenen Ebenen umgeschaltet werden und in der Sicherheitsabteilung eine wahrnehmbare Nachricht ausgegeben wird.

In Schritt S20 wird überprüft, ob alle erfassten Aufzugsbenutzer, die in der Aufzugskabine befördert werden, auch über eine Zutrittsberechtigung für den Zielort verfügen. Besitzt einer der Aufzugsbenutzer keine solche Zutrittsberechtigung, kann wiederum eine Sicherheitsmassnahme S21 ausgelöst werden. Altelrnativ oder zusätzlich zur Sicherheitsmassnahme S21 ist es möglich, die Aufzugssteuerung 37 über die Hauptsteuereinheit 31 so zu beeinflussen, dass die Aufzugskabine 36 nicht in die hochsicherheitsrelevanten Ebenen fährt. Eine andere Möglichkeit ist es, die Aufzugskabine entweder zu blockieren, sodass sich in dieser Aufzugskabine befindliche Aufzugsbenutzer nicht aussteigen können. Eine andere Möglichkeit ist es, die Aufzugskabine direkt wieder zurück in den öffentlichen Bereich zu befördern und die Aufzugsbenutzer aussteigen zu lassen. Eine andere Möglichkeit ist es, mit der Aufzugskabine an einen Sicherheitshalt zu fahren wo eine Überprüfung durch Sicherheitspersonal erfolgen kann.

In Schritt S22 werden die derart erfassten und überprüften Aufzugsbenutzer mit der Aufzugskabine 36 an die Zielorte befördert.

Mit der vorliegenden Erfindung ist eine Erhöhung der Sicherheit in Gebäudearealen möglich. Insbesondere ist es möglich, eine unbefugte Bewegung von Aufzugsbenutzern aus öffentlichen Bereichen in private Bereiche zu verhindern. Durch die Möglichkeit der Beeinflussung der Aufzugskabinen können Sicherheitskräfte frühzeitig und wirkungsvoll eingreifen und somit einen Zugang von nichtberechtigten Aufzugsbenutzern zu Hochsicherheitsbereichen verhindern.

Weiter ist es möglich, die Aufzugssteuerung 37 über die Hauptsteuereinheit 31 gezielt zu beinflussen, dass genau jene Kontrolldaten berücksichtigt werden, welche den in der Kabine sich befindenden Aufzugsbenutzern entsprechen. So ist es z.B. möglich, einen verbesserten Aufzugsbetrieb zu ermöglichen, falls nicht alle dem Aufzug zugeordneten Aufzugsbenutzer den Aufzug betreten haben, indem beispielsweise nur genau jene Ziele angefahren werden, welche den tatsächlich beförderten Aufzugsbenutzern entsprechen.

## Patentansprüche

1. Verfahren zum Betreiben einer Aufzugsanlage zur Beförderung von Aufzugsbenutzern in einem Gebäudeareal, wobei von einer Positionserfassungsvorrichtung Positionen von Aufzugsbenutzern im Gebäudeareal erfasst werden, in dem von einer Kamera (42) stammende Kamerasignale in Form digitaler Kamerabilder erfasst werden und von einer Auswerteeinheit (31) erfasste Positionen von Aufzugsbenutzern ausgewertet werden, **dadurch gekennzeichnet, dass** Positionen von Aufzugsbenutzern von einem Speichermedium als räumliche- und zeitliche Positionsdaten festgehalten werden; dass verschiedene Aufzugsbenutzer auf einem Kamerabild anhand von Unterscheidungskriterien unterschieden werden.

2. Verfahren gemäss Anspruch 1, **dadurch gekennzeichnet, dass** als Unterscheidungskriterium eine Farbe von Aufzugsbenutzern verwendet wird
bzw. dass als Unterscheidungskriterium eine Grösse und Form von Aufzugsbenutzern verwendet wird
bzw. dass als Unterscheidungskriterium Differenzen zwischen Kamerabildern verschiedener Kameras (42) verwendet werden bzw. dass als Unterscheidungskriterium Differenzen zwischen Kamerabildern, die zu verschiedenen Zeitpunkten aufgenommen wurden, verwendet werden.

3. Verfahren gemäss einem der Ansprüche 1 oder 2, **dadurch gekennzeichnet, dass** alle für Aufzugsbenutzer im Gebäudeareal zugänglichen Wege von Kameras (42) erfasst werden; dass von jeder Kamera (42) einen spezifischen Erfassungsbereich erfasst wird; dass benachbarte Kameras (42) so angeordnet sind, dass ein Aufzugsbenutzer, der sich von einem ersten Erfassungsbereich in einen benachbarten Erfassungsbereich bewegt, zuerst nur von einer ersten Kamera (42) erfasst wird, sobald der Aufzugsbenutzer einen Überlappungsbereich durchquert, der Aufzugsbenutzer von beiden Kameras (42) der benachbarten Erfassungsbereiche erfasst wird, und dass der Aufzugsbenutzer im zweiten Erfassungsbereich nur von einer zweiten Kamera (42) erfasst wird.

4. Verfahren gemäss einem der Ansprüche 1 bis 3, **dadurch gekennzeichnet, dass** eine Anzahl von Aufzugsbenutzern pro Kamerabild ermittelt wird
bzw. dass eine Bewegungsrichtung und Geschwindigkeit von Aufzugsbenutzern auf Kamerabildern ermittelt wird.

5. Verfahren gemäss einem der Ansprüche 1 bis 4, **dadurch gekennzeichnet, dass** ein Aufzugsbenutzer von einer Identifizierungseinheit (43, 44, 45) identifiziert wird
bzw. dass ein Aufzugsbenutzer von einer Identifizierungseinheit in Form eines Eingabeterminals (45) identifiziert wird
bzw. dass ein Aufzugsbenutzer von einer Identifizierungseinheit in Form eines Chipkarten-Readers (44) identifiziert wird
bzw. dass ein Aufzugsbenutzer von einer Identifizierungseinheit in Form eines drahtlosen RFID Chip-Interfaces (43) identifiziert wird.

6. Verfahren gemäss Anspruch 5, **dadurch gekennzeichnet, dass** ein Aufzugsbenutzer von einem biometrischen Erkennungssystem authentifiziert wird
bzw. dass ein Aufzugsbenutzer von einem biometrischen Erkennungssystem durch Erfassen eines Gesichts des Aufzugsbenutzers bzw. eines Fingerabdrucks des Aufzugsbenutzers bzw. einer Sprache des Aufzugsbenutzers authentifiziert wird.

7. Verfahren gemäss einem der Ansprüche 5 oder 6, **dadurch gekennzeichnet, dass** eine Positionserfassung eines Aufzugsbenutzers überprüft wird; und dass eine Identifizierung bzw. Authentifizierung des Aufzugsbenutzers überprüft wird.

8. Verfahren gemäss Anspruch 7, **dadurch gekennzeichnet, dass** dem Aufzugsbenutzer, falls er sich Aufzugsbenutzer korrekt identifiziert bzw. authentifiziert hat und seine Position erfasst wurde, von einer Zutrittsberechtigungseinheit eine Zutrittsberechtigung zum Gebäudeareal zugewiesen wird
bzw. falls er sich Aufzugsbenutzer korrekt identifiziert bzw. authentifiziert hat und seine Position erfasst wurde, von einer Zutrittsberechtigungseinheit eine Zutrittsberechtigung zum Gebäudeareal zugewiesen wird, in eine Tür geöffnet wird bzw. ein Drehkreuz (46) freigegeben wird bzw. dass falls sich der Aufzugsbenutzer nicht identifiziert bzw. authentifiziert hat oder seine Position nicht erfasst wurde, eine Sicherheitsmassnahme eingeleitet wird
bzw. dass falls sich der Aufzugsbenutzer nicht identifiziert bzw. authentifiziert hat oder seine Position nicht erfasst wurde, eine Sicherheitsmassnahme eingeleitet wird, in dem Eingangstüren bzw. Drehkreuze (46) oder andersartige Barrieren blockiert werden.

9. Verfahren gemäss Anspruch 8, **dadurch gekennzeichnet, dass** nachdem ein Aufzugsbenutzer das Gebäudeareal korrekt betreten hat, eine aktuelle Position des Aufzugsbenutzers auf einer Ebene (30, 40) des Gebäudeareals von der Positionserfassungsvorrichtung ermittelt wird.

10. Verfahren gemäss einem der Ansprüche 1 bis 9, **dadurch gekennzeichnet, dass** Positionsdaten und die Zutrittsberechtigung eines jeden Aufzugsbenutzers an eine Hauptsteuereinheit (31) übermittelt werden und in einem Förderprofil abgelegt werden.

11. Verfahren gemäss einem der Ansprüche 1 bis 10, **dadurch gekennzeichnet, dass** vom Aufzugsbenutzer an einem Eingabeterminal (49, 50) in einer Ebene (30, 40) des Gebäudeareals ein Zielruf bzw. Aufzugsruf eingegeben wird; und dass der eingegebene Zielruf bzw. Aufzugsruf an eine Hauptsteuereinheit (31) übermittelt wird bzw. dass vom Aufzugsbenutzer an einem Eingabeterminal (49, 50) in einer Ebene (30, 40) des Gebäudeareals ein Zielruf bzw. Aufzugsruf eingegeben wird; dass der eingegebene Zielruf bzw. Aufzugsruf an eine Hauptsteuereinheit (31) übermittelt wird; dass Positionsdaten und die Zutrittsberechtigung eines jeden Aufzugsbenutzers an die Hauptsteuereinheit (31) übermittelt werden und in einem Förderprofil abgelegt werden; und dass von der Hauptsteuereinheit (31) jedem an einem Eingabeterminal (49, 50) getätigtem Zielruf bzw. Aufzugsruf genau eine zeitlich aktuelle Aufzugsbenutzerposition und eine Zutrittsberechtigung des Aufzugsbenutzers zugeordnet wird
bzw. dass vom Aufzugsbenutzer an einem Eingabeterminal (49, 50) in einer Ebene (30, 40) des Gebäudeareals ein Zielruf bzw. Aufzugsruf eingegeben wird; dass der eingegebene Zielruf bzw. Aufzugsruf an eine Hauptsteuereinheit (31) übermittelt wird; und dass dem Aufzugsbenutzer von der Hauptsteuereinheit (31) eine Aufzugskabine zugewiesen wird
bzw. dass vom Aufzugsbenutzer an einem Eingabeterminal (49, 50) in einer Ebene (30, 40) des Gebäudeareals ein Zielruf bzw. Aufzugsruf eingegeben wird; dass der eingegebene Zielruf bzw. Aufzugsruf an eine Hauptsteuereinheit (31) übermittelt wird; dass dem Aufzugsbenutzer von der Hauptsteuereinheit (31) eine Aufzugskabine zugewiesen wird; und dass die zugewiesene Aufzugskabine vom Eingabeterminal (49, 50) in einem Display dargestellt wird.

12. Verfahren gemäss Anspruch 11, **dadurch gekennzeichnet, dass** der Aufzugsbenutzer die ihm zugewiesene Aufzugskabine(36) betritt bzw. dass der Aufzugsbenutzer die ihm zugewiesene Aufzugskabine (36) betritt; und dass falls der Aufzugsbenutzer keinen Zielruf sondern einen Aufzugsruf gelöst hat, der Aufzugsbenutzer in der Aufzugskabine (36) einen Kabinenruf löst.

13. Verfahren gemäss Anspruch 12, **dadurch gekennzeichnet, dass** eine Anzahl bzw. Position der erfassten Aufzugsbenutzer in der Aufzugskabine (36) überprüft wird;
bzw. dass eine Anzahl bzw. Position der erfassten Aufzugsbenutzer in der Aufzugskabine (36) überprüft wird; und dass falls die Anzahl der Aufzugsbenutzer, die sich in der Aufzugskabine (36) befinden, nicht mit der Anzahl der Aufzugsbenutzer übereinstimmt, die dieser Aufzugskabine (36) zugewiesen wurden, eine Sicherheitsmassnahme ausgelöst wird
bzw. dass eine Anzahl bzw. Position der erfassten Aufzugsbenutzer in der Aufzugskabine (36) überprüft wird; und dass falls die Position eines Aufzugsbenutzers, der sich in der Aufzugskabine (36) befindet, nicht mit der Position eines Aufzugsbenutzers übereinstimmt, der den Zielruf bzw. Aufzugsruf getätigt hat, eine Sicherheitsmassnahme ausgelöst wird.

14. Verfahren gemäss Anspruch 12 oder 13, **dadurch gekennzeichnet, dass** von der Hauptsteuereinheit (31) zu jedem Aufzug ein Förderprofil geführt wird, welches Förderprofil dauernd aktualisierte Angaben über die Anzahl der Aufzugsrufe, die der Aufzugskabine (36) zugeordnet sind, umfasst
bzw. dass von der Hauptsteuereinheit (31) zu jedem Aufzug ein Förderprofil geführt wird, welches Förderprofil dauernd aktualisierte Angaben über die Anzahl der Aufzugsrufe, die der Aufzugskabine (36) zugeordnet sind, umfasst; und dass im Förderprofil zu jedem Aufzugsruf eine Einsteigeebene und eine Zielebene protokolliert werden bzw. dass von der Hauptsteuereinheit (31) zu jedem Aufzug ein Förderprofil geführt wird, welches Förderprofil dauernd aktualisierte Angaben über die Anzahl der Aufzugsrufe, die der Aufzugskabine (36) zugeordnet sind, umfasst; und dass im Förderprofil der Zeitpunkt, zu dem der Zielruf bzw. Aufzugsruf ausgelöst wurde, protokolliert wird bzw. dass von der Hauptsteuereinheit (31) zu jedem Aufzug ein Förderprofil geführt wird, welches Förderprofil dauernd aktualisierte Angaben über die Anzahl der Aufzugsrufe, die der Aufzugskabine (36) zugeordnet sind, umfasst; und dass im Förderprofil eine Reihenfolge angegeben wird, in der Ziele von der Aufzugskabine (36) angefahren werden.

15. Aufzugsanlage zur Durchführung des Verfahrens nach einem der Ansprüche 1 bis 14.

## Claims

1. Method of operating a lift installation for conveying lift users in a building area, wherein positions of lift users in the building area are detected by a position detection device in that camera signals, which originate from a camera (42), in the form of digital camera images are detected and detected positions of lift users are evaluated by an evaluating unit (31), **characterised in that** positions of lift users are retained by a storage medium as position data on a three-dimensional and time basis and that different lift users on a camera image are distinguished on the basis of distinction criteria.

2. Method according to claim 1, **characterised in that** a colour of lift users is used as distinction criterion or that a size and shape of lift users are used distinction criterion or that differences between camera images of different cameras (42) are used as distinction criterion or that differences between camera images taken at different points in time are used as distinction criterion.

3. Method according to one of claims 1 and 2, **characterised in that** all paths accessible to lift users in the building area are detected by cameras (42), that a specific detection region is detected by each camera (42), that adjacent cameras (42) are so arranged that a lift user who moves from a first detection region to an adjacent detection region is initially detected only by a first camera (42), that as soon as the lift user crosses an overlap region the lift user is detected by both cameras (42) of the adjacent detection regions and that the lift user is detected in the second detection region only by a second camera (42).

4. Method according to any one of claims 1 to 3, **characterised in that** a number of lift users is ascertained per camera image or that a movement direction and speed of lift users is ascertained on camera images.

5. Method according to any one of claims 1 to 4, **characterised in that** a lift user is identified by an identifying unit (43, 44, 45) or that a lift user is identified by an identifying unit in the form of an input terminal (45) or that a lift user is identified by an identifying unit in the form of a chipcard reader (440 or that a lift user is identified by an identifying unit in the form of a wireless RFID chip interface (43).

6. Method according to claim 5, **characterised in that** a lift user is authenticated by a biometric recognition system or that a lift user is authenticated by a biometric recognition system by detecting a face of the lift user or a fingerprint of the lift user or speech of the lift user.

7. Method according to one of claims 5 and 6, **characterised in that** a positioned detection of a lift user is checked and that an identification or authentication of the lift user is checked.

8. Method according to claim 7, **characterised in that** if the lift user has correctly identified or authenticated himself and his position has been detected an access authorisation to the building area is granted to the lift user by an access authorisation unit or,
if the lift user has correctly identified or authenticated himself and his position has been detected an access authorisation to the building area is granted to the lift user by an access authorisation unit **in that** a door is opened or a turnstile (46) is released or that if the lift user has not correctly identified or authenticated himself and his position has not been detected a safety measure is initiated, or
that if the lift user has not identified or authenticated himself or his position has not been detected a safety measure is initiated **in that** entry doors or turnstiles (46) or other forms of barrier are blocked.

9. Method according to claim 8, **characterised in that** after a lift user has correctly entered the building area a current position of the lift user on a plane (30, 40) of the building area is ascertained by the position detecting device.

10. Method according to any one of claims 1 to 9, **characterised in that** position data and the access authorisation of each lift user are communicated to a main control unit (31) and are filed in a transport profile.

11. Method according to any one of claims 1 to 10, **characterised in that** a destination call or lift call is input by the lift user at an input terminal (49, 50) in a plane (30, 40) of the building area and that the input destination call or the lift call is communicated to a main control unit (31) or that a destination call or lift call is input by the lift user at an input terminal (49, 50) in a plane (30, 40) of the building area, that the input destination call or lift
call is communicated to a main control unit (31), that position data and the access authorisation of each lift user are communicated to the main control unit (31) and filed in a transport profile and that precisely one time-based current lift user position and an access authorisation of the lift user are associated by the main control unit (31) with each destination call or lift call made at an input terminal (49, 40) or that a destination call or lift call is input by the lift user at an input terminal (49, 50) in a plane (30, 40) of the building area, that the input destination call or lift call is communicated to a main control unit (31) and that a lift cage is assigned to the lift user by the main control unit (31) or that a destination call or lift call is input by the lift user at an input terminal (49, 50) in a plane (30, 40) of the building area, that the input destination call or lift call is communicated to a main control unit (31), that a lift cage is assigned to the lift user by the main control unit (31) and that the assigned lift cage is illustrated in a display by the input terminal (49, 50).

12. Method according to claim 11, **characterised in that** the lift user enters the lift cage (36) assigned thereto or that the lift user enters the lift cage (36) assigned thereto and that if the lift user has triggered not a destination call, but a lift call the lift user triggers a cage call in the lift cage (36).

13. Method according to claim 12, **characterised in that** a number or position of the detected lift users in the lift cage (36) is checked or that a number or position of the detected lift users in the cage (36) is checked and that if the number of the lift users present in the lift cage (36) does not correspond with the number of lift users which was assigned to this lift cage (36) a safety measure is triggered or that a number or position of the detected lift users in the lift cage (36) is checked and that if the position of a lift user present in the lift cage (46) does not correspond with the position of a lift user who has made the destination call or lift call a safety measure is triggered.

14. Method according to claim 12 or 13, **characterised in that** a transport profile is conducted by the main control unit (31) for each lift, which transport profile comprises constantly updated statements about the number of lift calls associated with the lift cage, (36) or that a transport profile is conducted by the main control unit (31) for each lift, which transport profile comprises constantly updated statements about the number of lift calls associated with the lift cage (36), and that a boarding plane and a destination plane are recorded in the transport profile for each lift call or that a transport profile is conducted by the main control unit (31) for each lift, which transport profile comprises constantly updated statements about the number of the destination calls associated with the lift cage (36), and that the time instant in which the destination call or lift call was triggered is recorded in the transport profile or that a transport profile is conducted by the main control unit (31) for each lift, which transport profile comprises constantly updated statements about the number of the lift calls associated with the lift cage (36), and that a sequence in which destinations are moved to by the lift cage (36) is indicated in the transport profile.

15. Lift installation for carrying out the method according to any one of claims 1 to 14.

## Revendications

1. Procédé pour faire fonctionner une installation d'ascenseur destinée au transport d'utilisateurs d'ascenseur dans une aire d'immeuble, étant précisé qu'un dispositif d'enregistrement de position enregistre les positions d'utilisateurs d'ascenseur dans l'aire d'immeuble, grâce au fait que des signaux de caméra provenant d'une caméra (42) sont enregistrés sous forme d'images de caméra numériques, et que les positions d'utilisateurs d'ascenseur enregistrées sont analysées par une unité d'analyse (31),
**caractérisé en ce que** les positions d'utilisateurs d'ascenseur sont conservées par un support de mémoire comme données de position dans l'espace et dans le temps ; **en ce que** différents utilisateurs d'ascenseur sont différenciés à l'aide de critères de différenciation sur une image de caméra.

2. Procédé selon la revendication 1, **caractérisé en ce qu'**il utilise comme critère de différenciation une couleur d'utilisateurs d'ascenseur,
ou **en ce qu'**il utilise comme critère de différenciation une taille et une forme d'utilisateurs d'ascenseur,
ou **en ce qu'**il utilise comme critère de différenciation des différences entre les images de caméras (42) différentes,
ou **en ce qu'**il utilise comme critère de différenciation des différences entre des images de caméra qui sont prises à des moments différents.

3. Procédé selon l'une des revendications 1 ou 2, **caractérisé en ce que** toutes les voies accessibles aux utilisateurs d'ascenseur dans l'aire d'immeuble sont enregistrées par des caméras (42) ; **en ce que** chaque caméra (42) enregistre une zone d'enregistrement spécifique ; **en ce que** des caméras (42) voisines sont disposées de telle sorte qu'un utilisateur d'ascenseur qui se déplace d'une première zone d'enregistrement à une zone d'enregistrement voisine n'est tout d'abord enregistré que par une première caméra (42), que dès que ledit utilisateur d'ascenseur traverse une zone d'empiètement, il est enregistré par les deux caméras (42) des zones d'enregistrement voisines, et que l'utilisateur d'ascenseur n'est enregistré dans la seconde zone d'enregistrement que par une seconde caméra (42).

4. Procédé selon l'une des revendications 1 à 3, **caractérisé en ce qu'**un nombre d'utilisateurs d'ascenseur est défini pour chaque image de caméra,
ou **en ce qu'**une direction de déplacement et une vitesse d'utilisateurs d'ascenseur sur les images de caméra sont définies.

5. Procédé selon l'une des revendications 1 à 4, **caractérisé en ce qu'**un utilisateur d'ascenseur est identifié par une unité d'identification (43, 44, 45),
ou **en ce qu'**un utilisateur d'ascenseur est identifié par une unité d'identification sous la forme d'un terminal d'entrée (45),
ou **en ce qu'**un utilisateur est identifié par une unité d'identification sous la forme d'un lecteur de carte à puce (44),
ou **en ce qu'**un utilisateur d'ascenseur est identifié par une unité d'identification sous la forme d'une interface à puce RFID (43).

6. Procédé selon la revendication 5, **caractérisé en ce qu'**un utilisateur d'ascenseur est authentifié par un système de détection biométrique,
ou **en ce qu'**un utilisateur d'ascenseur est identifié par un système de détection biométrique grâce à l'enregistrement d'un visage de l'utilisateur ou de ses empreintes digitales ou d'une langue qu'il parle.

7. Procédé selon l'une des revendications 5 ou 6, **caractérisé en ce qu'**un enregistrement de position d'un utilisateur d'ascenseur est contrôlé ; et **en ce qu'**une identification ou une authentification de l'utilisateur d'ascenseur est contrôlée.

8. Procédé selon la revendication 7, **caractérisé en ce qu'**à l'utilisateur d'ascenseur, au cas où il s'est correctement identifié ou authentifié et où sa position a été enregistrée, est attribuée par une unité d'autorisation d'accès une autorisation d'accès à l'aire d'immeuble,
ou au cas où il s'est correctement identifié ou authentifié et où sa position a été enregistrée, est attribuée par une unité d'autorisation d'accès une autorisation d'accès à l'aire d'immeuble et s'ouvre une porte ou se débloque un tourniquet (46),
ou au cas où l'utilisateur d'ascenseur ne s'est pas identifié ou authentifié ou sa position n'a pas été enregistrée, est déclenchée une mesure de sécurité,
ou au cas où l'utilisateur d'ascenseur ne s'est pas identifié ou authentifié ou sa position n'a pas été enregistrée, est déclenchée une mesure de sécurité grâce au fait que les portes d'entrée ou tourniquets (46) ou autres barrières sont bloqués.

9. Procédé selon la revendication 8, **caractérisé en ce que**, après qu'un utilisateur d'ascenseur est entré correctement dans l'aire d'immeuble, une position du moment dudit utilisateur à un niveau (30, 40) de l'aire d'immeuble est définie par le dispositif d'enregistrement de position.

10. Procédé selon l'une des revendications 1 à 9, **caractérisé en ce que** des données de position et l'autorisation d'accès de chaque utilisateur d'ascenseur sont transmises à une unité de commande principale (31) et sont stockées dans un profil de transport.

11. Procédé selon l'une des revendications 1 à 10, **caractérisé en ce que** l'utilisateur d'ascenseur entre sur un terminal d'entrée (49, 50), à un niveau (30, 40) de l'aire d'immeuble, un appel de destination ou un appel d'ascenseur ; et **en ce que** l'appel de destination ou l'appel d'ascenseur entré est transmis à une unité de commande principale (31)
ou **en ce que** l'utilisateur d'ascenseur entre sur un terminal d'entrée (49, 50), à un niveau (30, 40) de l'aire d'immeuble, un appel de destination ou un appel d'ascenseur ; et **en ce que** l'appel de destination ou l'appel d'ascenseur entré est transmis à une unité de commande principale (31) ; **en ce que** des données de position et l'autorisation d'accès de chaque utilisateur d'ascenseur sont transmises à l'unité de commande principale (31) et sont stockées dans un profil de transport ; et **en ce que** l'unité de commande principale (31) attribue à chaque appel de destination ou appel d'ascenseur effectué sur un terminal d'entrée (49, 50) exactement une position d'utilisateur d'ascenseur actualisée dans le temps et une autorisation d'accès de l'utilisateur d'ascenseur,
ou **en ce que** l'utilisateur d'ascenseur entre sur un terminal d'entrée (49, 50), à un niveau (30, 40) de l'aire d'immeuble, un appel de destination ou un appel d'ascenseur ; **en ce que** l'appel de destination ou l'appel d'ascenseur entré est transmis à une unité de commande principale (31) ; et **en ce qu'**une cabine d'ascenseur est attribuée à l'utilisateur d'ascenseur par l'unité de commande principale (31),
ou **en ce que** l'utilisateur d'ascenseur entre sur un terminal d'entrée (49, 50), à un niveau (30, 40) de l'aire d'immeuble, un appel de destination ou un appel d'ascenseur ; **en ce que** l'appel de destination ou l'appel d'ascenseur entré est transmis à une unité de commande principale (31) ; **en ce qu'**une cabine d'ascenseur est attribuée à l'utilisateur d'ascenseur par l'unité de commande principale (31) ; et **en ce que** la cabine d'ascenseur attribuée est visualisée par le terminal d'entrée (49, 50) sur un affichage.

12. Procédé selon la revendication 11, **caractérisé en ce que** l'utilisateur d'ascenseur entre dans la cabine d'ascenseur (36) qui lui est attribuée ; et **en ce que** l'utilisateur d'ascenseur, au cas où il a effectué non pas un appel de destination, mais un appel de cabine, effectue dans la cabine d'ascenseur (36) un appel de cabine.

13. Procédé selon la revendication 12, **caractérisé en ce qu'**un nombre ou une position des utilisateurs d'ascenseur enregistrés sont contrôlés dans la cabine d'ascenseur (36) ;
ou **en ce qu'**un nombre ou une position des utilisateurs d'ascenseur enregistrés sont contrôlés dans la cabine (36) ; et **en ce que**, au cas où le nombre d'utilisateurs d'ascenseur qui se trouvent dans la cabine (36) ne coïncide pas avec le nombre d'utilisateurs d'ascenseur qui sont attribués à cette cabine (36), une mesure de sécurité est déclenchée,
ou **en ce qu'**un nombre ou une position des utilisateurs d'ascenseur enregistrés sont contrôlés dans la cabine (36) ; et **en ce que**, au cas où la position d'un utilisateur d'ascenseur qui se trouve dans la cabine (36) ne coïncide pas avec la position d'un utilisateur d'ascenseur qui a effectué l'appel de destination ou l'appel d'ascenseur, une mesure de sécurité est déclenchée.

14. Procédé selon la revendication 12 ou 13, **caractérisé en ce que** l'unité de commande principale (31) gère pour chaque ascenseur un profil de transport qui comprend des indications actualisées en permanence sur le nombre d'appels d'ascenseur qui sont attribués à la cabine d'ascenseur (36),
ou **en ce que** l'unité de commande principale (31) gère pour chaque ascenseur un profil de transport qui comprend des indications actualisées en permanence sur le nombre d'appels d'ascenseur qui sont attribués à la cabine d'ascenseur (36) ; et **en ce que** dans le profil de transport, un niveau de départ et un niveau de destination sont consignés pour chaque appel d'ascenseur,
ou **en ce que** l'unité de commande principale (31) gère pour chaque ascenseur un profil de transport qui comprend des indications actualisées en permanence sur le nombre d'appels d'ascenseur qui sont attribués à la cabine d'ascenseur (36) ; et **en ce que** dans le profil de transport est consigné le moment où l'appel de destination ou l'appel d'ascenseur a été déclenché,
ou **en ce que** l'unité de commande principale (31) gère pour chaque ascenseur un profil de transport qui comprend des indications actualisées en permanence sur le nombre d'appels d'ascenseur qui sont attribués à la cabine d'ascenseur (36) ; et **en ce que** dans le profil de transport est indiqué un ordre dans lequel les destinations sont approchées par la cabine d'ascenseur (36).

15. Installation d'ascenseur pour la mise en oeuvre du procédé selon l'une des revendications 1 à 14.
